Europäisches Patentamt

European Patent Office

Office européen des brevets

(11) Publication number: **0 504 539 A1**

# EUROPEAN PATENT APPLICATION

(21) Application number: **91830110.2**

(22) Date of filing: **21.03.91**

(51) Int. Cl.5: **A47J 42/44**, A47J 31/40

(43) Date of publication of application:
**23.09.92 Bulletin 92/39**

(84) Designated Contracting States:
**AT BE CH DE DK ES FR GB GR IT LI LU NL SE**

(71) Applicant: **GRIMAC SRL**
**Via Rigosa 46**
**I-40069 Zola Predosa (Bologna)(IT)**

(72) Inventor: **Gravotta, Gaetano**
**via d'Azeglio 74**
**I-40123 Bologna(IT)**

(74) Representative: **Sassatelli, Franco T., Dr.**
**c/o INIP via Ruggi 5**
**I-40137 Bologna(IT)**

(54) **Electronic level regulator for milled coffee dose deliverers.**

(57) The device foresees that from feeding store (1) the beans coffee comes down, throught a drain-pipe (2), into a milling chamber (3) from which the milled coffee, through a side drain-pipe (4), falls into the delivering store (5). When the milled coffee is turned out from the delivering store (5) until to free the photocell (6) ray, the electronic card, included in the device, starts the milling and then it stops the same again at the preordainet time. The electronic card device foresees a working in which the feeder or modulator (16) drives a photocell (6) floodlight (7), the ray emitted by the floodligh is caught by a receiver (8) which transmits the electric pulse to an amplifier (9) from which it is sent to a signal computer (10). Said computer (10) receives furthermore the feeder (16) pulse, and after having elaborated this pulse, the same is transmitted to a first timer (11), to a second timer (12) to a relay (13) and to the milling group motor (14) which is activated and then it stops after a preordainet time to ray closure. And so in prosecution whenever the ray level becomes free. This is allowed by the feeder (15) which feeds the card.

FIG.1

The invention refers to a new solution in the milling and milled coffee dose delivering machines characterized by an electronic device with programmed card which, as soon as the milled coffee quantity presents in the delivering store lowers under a certain level, automatically drives the beans coffee milling so as to restore the initial supply condition. These machines, especially used in service restaurants or in communities, foresee an upper feeding store of beans coffee with gravitation discharge into a milling chamber from which the milled coffee with side drain-pipe fall down in the delivering store. At present after having driven, by means of levers, the milled coffee dose delivering it is necessary to act by means of a milling group push-bottom to permit the quantity restoration into the delivering store. In an additional solution is foreseen an automatic operation by microswitches use which are however activated by a special device which acts after a preordainet set of allocated doses. The said system inconvenience consists in the fact that often many reasons, as for example the interference elements presence such as dust and the same coffee beans, do not allow to the starting devices to begin the milling. The same inconvenience may moreover occurs in the milling stop phase. Furthermore, the operative cycle is connected to an invariable preordainet doses number, characteristic does not permit a modularity in the coffee to mill. In this way is necessary a starting and a stopping phase for each allocated dose.

In comparison with these present systems, the invented device enables a motory power saving, a milling motor group wear reduction and reduces the ambient noise by adopting a new conception system that foresees the milling phase no more in connection with the dose delivering phase but to the fact that, when the milled coffee quantity in the delivering store descends under a preordainet level, the photocell ray drives an electronic card device which by means of a time drives, on the base of fixed time, the milling phase.

The invented system foresees the initial milled coffee supply drives by means of a push-bottom which starts the driving member of the milling assembly. From the upper feeding store 1 the beans coffee comes down, through a drain-pipe 2, into a milling chamber 3 from which the milled coffee, through a side drain-pipe 4, falls into the delivering store 5 up over the level of the photocell 6 ray. When coffee is expelled from the store 5, so to free the photocell 6 ray, the elctronic card, in which is included a timer, starts the milling and then stops it again when necessary. The electronic card device foresees an operation in which the feeder or modulator 16 drives the photocell 6 floodlight 7, the ray gives out by this floodlight is caught by a receiver 8 which transmits the electronic pulse to an amplifier 9 from which it is sent to a signal computer 10. Said computer 10 receives also the feeder 16, pulse and after having been elaborated, the pulse is transmitted to a timer 11, to a second limit time timer 12, to a relay 13 and to the milling group motor 14 starting the milling and stopping the same after the fixed time from the photocell ray interrupt.

In a second version is foreseen use of two photocells 20 and 21 positioned at different heights to avoid the timer use. In this second version, the milling phase starts when the floodlight 22 ray comes first to the receiver 23 and then, by means of the amplifier 24, to the signal computer 25 which receives also pulse from the modulator 30 and after the elaboration said pulse is sent to the limit time timer 26, to the ralay 27 and to motor 28 starting milling. When milled coffee level disconnects the beam between the floodlight 31 and the receiver 32, the milling stops. This is permitted by the feeder 29 which feeds card. In version the operation is possible by reflection through the reflex member 17, the floodlight 18 and the receiver 19. The invented device uses, as level sensors, a luminous rays beam or a ray laser produced by special generator. The said beam or the said ray are received by a radiation tracer suitable for the radiation emitted.

The luminous beam may be made of visible light (infrared) or invisible (ultraviolet); furthermore the same may be continuous, intermitted and modulate in width or in frequency. Said beam may be received directly by the detector (bar operation) or it may be reflexed by a suitable reflector before being caught by the detector (reflection operation). The beam received from the detector is elaborated by a suitable circuit which excludes false command and that, in case of intermittent or modulate beam, filters the received signals through a suitable sync signal sent directly to the modulator. The elaborated and filtered to the interferences signal is then sent to a timer which provides to drive the motor starting device for the fixed time. In the case that said starting device stayed in actin for to much time, intervenes a protection that stops it.

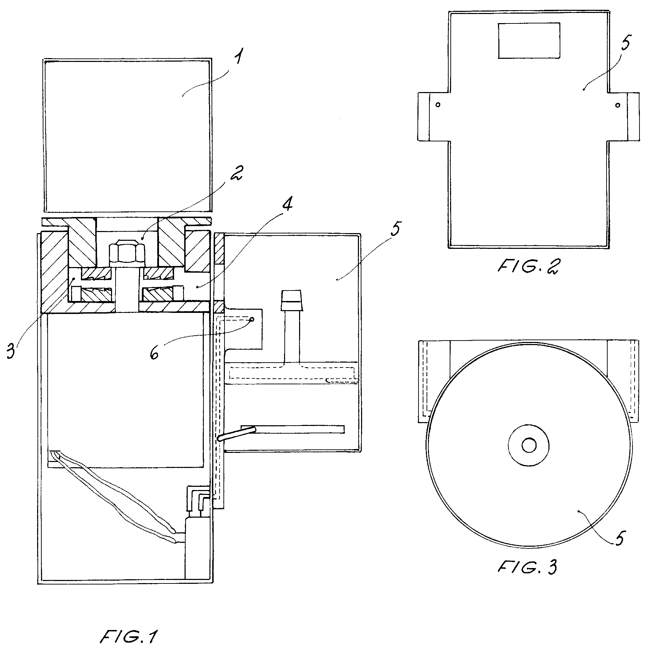

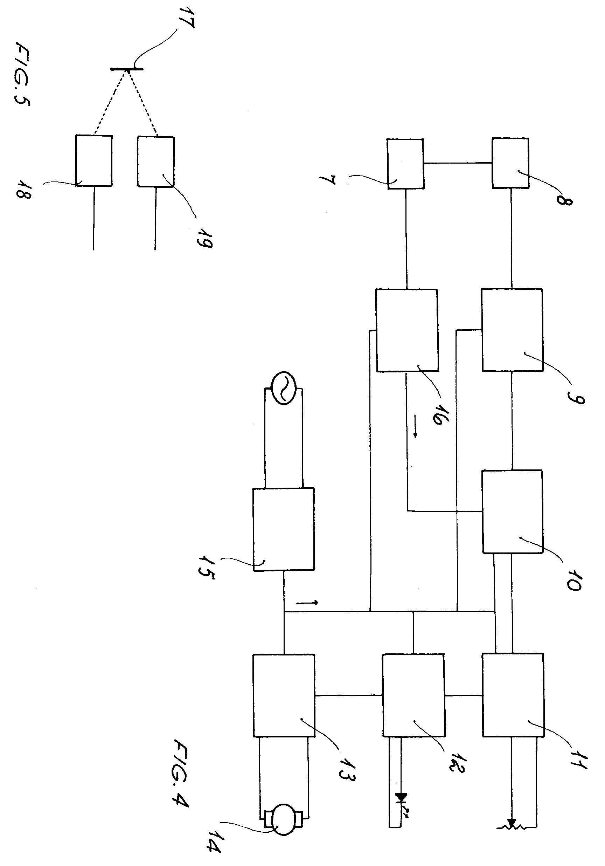

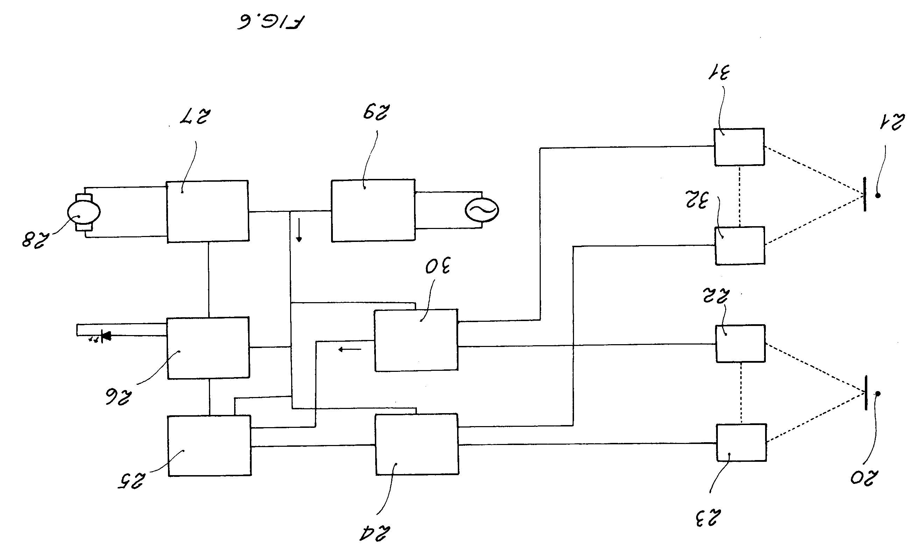

Execution versions of the present device are illustrated in indicative and essential way in the figures of tables 1, 2 and 3. In table 1 fig. 1 is the longitudinal section view of the machine to show the feeding and delivering stores with intermediate milled section and with mounted the photocell 6. Fig. 2 is longitudinal section view, with phase 90° angle rispect to the previous one, of the only delivering store. Fig. 3 is transversal section view of the said delivering store to show the floodlight 7 and the receiver of photocell 6. In table 2 fig. 4 is operation block diagram with only minimum lever tracer. At the moment in which the tracer picks us the emitted radiation is it started the driven device of the coffee-grinder motor. When then the milled coffee reaches the level tracer, it is started the timer which permits to the motor driven device to stay still set going for the preordainet time. In the case that the level is not reached within the maximum preordainet time, the driven device is defused and simultaneously is set goint the light-emitting diode. Fig. 5 is operation diagram. In table 3 fig. is operation block diagram with minimum level tracer and maximum level tracer. When the minimum level tracer picks up the emitted radiation, is set goint the driven device of the coffee-grinder motor. When then the milled coffee reaches the maximum lever tracer, then motor driven device is defused. If the maximum level is not reached within a maximum preordainet time, is defused the driven device and simultaneously is set goint the light-emitting diode that indicates the stop for reaching of limit time.

The invented device is producing in different way and enjoing with other means suitable.

**Claims**

1. Electronic level regulator for milled coffee dose deliverers, characterized by the fact that from the upper feeding store (1) the beans coffee comes down, through a drain-pipe (2), into a milling chamber (3) from which the milled coffee, through a side drain-pipe (4), falls into the delivering store (5) up over the level of the photocell (6) ray. When milled coffee is expelled from the delivering store (5) so to free the photocell (6) ray, sets going an electronic card device in which is included a timer which starts the milling and then stops it again after the preordainet time from the ray interrupt by means of the milled coffee. The electronic card device foresees that the feeder or modulator (16) drives a floodlight (7) of the photocell (6); the ray emitted by this floodlight is then caught by a receiver (8) which transmits the electric pulse to an amplifier (9) from which it is sent to a signal computer (10). Said computer (10) receives also the feeder (16) pulse and after having been elaborated it is transmitted to a timer (11), to a limit time timer (12), to a relay (13) and to the milling group motor (14) starting the milling and stopping the same after the fixed time from the photocell (6) ray interrupt by means of the milled coffee. An so each time that the ray beam becomes free.

2. Electronic level regulator for milled coffee dose deliverers, characterized by the fact that in a second version is foreseen the use of two photocells (20 and 21) positioned at different heights to avoid the timer use. In said version, the milling phase starts when the floodlight (22) ray, set going to a pulse coming to the feeder (30), arrives first to the receiver (23) and then, through the amplifier (24), to the signal computer (25). Said computer (25) receives also the feeder (30) and after the elaboration, said pulse is sent to the limit time timer (26), to the relay (27) and to the motor (28) starting the milling. When the milled coffee level disconnects the beam between the floodlight (31) and the receiver (32) the milling stops.

3. Electronic level regulator for milled coffee dose deliverers, as per claim 1), characterized by the fact that the operation is possible by reflection through a reflex member (17), a floodlight (18) and a receiver (19).

FIG.1

FIG.2

FIG. 3

EP 0 504 539 A1

FIG. 4

FIG. 5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-935 751 (ZWANGER GMBH) <br> * page 1, line 1 - page 2, line 111; figures * | 1 | A47J42/44 <br> A47J31/40 |
| Y | | 2,3 | |
| Y | DE-B-1 256 375 (ROWENTA METALLWARENFABRIK GMBH) <br> * column 3, line 34 - column 4, line 63; figures * | 2 | |
| Y | GB-A-1 360 673 (BUNN-O-MATIC CORPORATION) <br> * page 2, line 78 - line 93; figures 1,3,4 * | 3 | |
| A | US-A-3 386 666 (DORE) <br> * column 1, line 69 - column 3, line 53; figures * | 1 | |
| A | DE-A-2 806 083 (KRONE-MÜHLEN- UND GERÄTEBAU WOLFGANG SCHUCHARDT) <br> * the whole document * | 1 | |
| A | US-A-4 665 808 (PULVERMÜLLER) | | **TECHNICAL FIELDS SEARCHED (Int. Cl.5)** <br><br> A47J |

The present search report has been drawn up for all claims

| Place of search | Date of completion of the search | Examiner |
|---|---|---|
| THE HAGUE | 29 NOVEMBER 1991 | BODART P. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)